# EUROPÄISCHE PATENTSCHRIFT

(11) **EP 0 842 003 B1**
(45) Veröffentlichungstag und Bekanntmachung des Hinweises auf die Patenterteilung: **06.10.1999**
(21) Anmeldenummer: 96928332.4
(22) Anmeldetag: 22.07.1996
(51) Int. Cl.: B23B 27/04

(54) **STECHEINSATZ**
RECESSING TOOL INSERT
PLAQUETTE D'OUTIL A SAIGNER

(30) Priorität: 28.07.1995 DE 19527696
(43) Veröffentlichungstag der Anmeldung: 20.05.1998
(73) Patentinhaber: Widia GmbH, 45145 Essen (DE)
(72) Erfinder: HINTZE, Wolfgang, D-45136 Essen (DE); WÜRFELS, Andreas, D-46535 Dinslaken (DE)
(74) Vertreter: Vomberg, Friedhelm, Dipl.-Phys.
(86) Internationale Anmeldenummer: DE9601389
(87) Internationale Veröffentlichungsnummer: WO9704907

(56) Entgegenhaltungen:
- EP-A- 0 059 602
- EP-A- 0 568 512
- DE-A- 2 404 302
- DE-A- 3 819 415
- DE-A- 4 310 131
- FR-A- 2 561 960
- SOVIET PATENT ABSTRACTS Section PQ, Week 9306 31.März 1993 Derwent Publications Ltd., London, GB; Class P54, AN 93-052248 XP002019502 & SU,A,1 720 802 (KARBIDNYE MATERIALY SCI LAB) , 23.März 1992
- METALWORKING PRODUCTION, Bd. 129, Nr. 5, Mai 1985, LONDON GB, Seiten 83-84, XP002019501 "Iscar tightens its grip on precision tooling"

## Beschreibung

Die Erfindung betrifft einen Stecheinsatz zur spanabhebenden Bearbeitung von Werkstücken, mit mindestens einer vorderen, vorzugsweise quer zur Stecheinsatzlängsachse angeordneten Schneidkante (Stirnschneide). Ein derartiger Stecheinsatz ist z.B. aus EP-A-0 568 512 bekannt.

Um auch bei tiefen Einstichnuten ein einfaches Auslaufen des Spanes unter Zerbrechung in einzelne Teilstücke zu gewährleisten, wird in der DE 24 04 302 C2 vorgeschlagen, in der die Spanleitfläche bildenden Schneidfläche eine langgestreckte, von der stirnseitigen Freifläche ausgehende Längsnut einzuschleifen, die sich nur über einen Teil der Länge der Schneidfläche erstreckt und an ihrem hinteren Ende stoßfrei wieder in die Schneidfläche einmündet. Die Schneidfläche und der Boden der Längsnut können unterschiedliche Spanwinkel aufweisen. Erfahrungen haben gezeigt, daß durch einen solchen Schneideinsatz keine ausreichende Spankontrolle bei kleinen Vorschüben gewährleistet werden kann. Entsprechendes gilt für einen Schneideinsatz nach der EP 0 257 002 A2.

Der Stecheinsatz nach DE 38 19 415 C2 besitzt in der an die Stirnschneide angrenzenden Spanfläche eine Vertiefung, die vorn von einer von der Stirnschneide unter Bildung eines positiven Spanwinkels abfallenden und sich dabei aus der von den Schneiden aufgespannten Ebene nach hinten unten erstreckenden Hauptschneiden-Schrägfläche begrenzt ist sowie eine von der Hauptschneide ausgehende Stützfläche, auf der die von der Hauptschneide kommenden und sich neben der Stützfläche in die Vertiefung einformenden Späne aufliegen. Die mittlere Vertiefung wird zu beiden Nebenschneiden hin jeweils von einer von der betreffenden Nebenschneide unter Bildung eines positiven Spanwinkels abfallenden Nebenschneiden-Schrägfläche begrenzt. Die Stützfläche wird von einer zwischen den Nebenschneiden-Schragflächen angeordneten, die Vertiefung in Schneidplattenlängsrichtung durchziehenden Längsrippenanordnung gebildet, die zwei jeweils einer Nebenschneide zugewandte und für die von der zugeordneten Nebenschneide kommende Späne eine die Späne nach oben ablenkende Auflauffläche bildende Seitenflächen aufweist. Allerdings sind die erhabenen Längsrippen mit Stützflächen, die von der Stirnschneide ausgehen, weder für eine ausreichende Spankontrolle noch eine erwünschte Spanverschmälerung geeignet.

Die DE 39 07 922 C2 beschreibt einen Stecheinsatz mit einer Spanfläche, die einen Zentralbereich mit wenigstens einer konvexen Kalotte und mindestens einen den Zentralbereich allseits umgebenden und ihm gegenüber schräg ansteigenden Randabschnitt aufweist. Im vorderen Randabschnitt, der der genannten Kalotte im Zentralbereich vorgeschaltet ist, soll wenigstens eine weitere konkave oder konvexe Kalotte und eine oder mehrere zwischen den Randabschnitten angeordnete, nutenartige Vertiefungen vorgesehen sein, die den Zentralbereich mit den Kanten verbinden. Die genannten Spanformelemente wirken in der Praxis jedoch nicht wie gewünscht zusammen, so daß keine ausreichende Verschmälerung der Spanbreite erreichbar ist. Zudem schwächen die in die Schneidecken laufenden nutartigen Vertiefungen die Schneidecken. Unmittelbar an die Stirnschneide angrenzende Noppen sind nur in einem eng begrenzten Vorschubbereich anwendbar und bergen bei größeren Vorschüben die Gefahr eines Spänestaues.

Es ist Aufgabe der vorliegenden Erfindung, einen Schneideinsatz, vor allen Dingen zum Stechdrehen zu schaffen, der mindestens eine der folgenden Forderungen erfüllt:
- Die Erzeugung eines im wesentlichen ebenen Nutgrundes bei geraden Einstichen,
- eine hohe Oberflächengüte der Nutflanken,
- Wirksamkeit bei unterschiedlichen Schneidenprofilen, insbesondere kreisbogenförmigen und polygonalen Schhneidenprofilen,
- einen kontrollierten Spanbruch in einem breiten Vorschubbereich einschließlich kleinster Vorschübe / Spanungsdicken,
- einen kontrollieren Spanbruch bei duktilen Werkstückstoffen und
- keine Einbußen in der Schneidenstabilität.

Diese Aufgabe wird durch den Stecheinsatz nach Anspruch 1 gelöst.

Die nutenförmigen Vertiefungen, die achsensymmetrisch und parallel zur Stecheinsatzlängsachse in der Spanfläche liegen und die über ihre Länge eine gleichbleibende Breite - mit Ausnahme der hinteren Auslaufzone - aufweisen und mit ihrem vorderen Ende die Schneidkante durchbrechen, haben einen lateralen Abstand zwischen 30 und 80 %, vorzugsweise 40 bis 65 %, der durch die Stirnschneidenlänge gegebenen Stechbreite und eine Nuttiefe zwischen 0,01 und 0,4 mm. Bei profilierter Schneide ergibt sich die Stechbreite durch den maximalen Abstand der Schneidenpunkte senkrecht zur Stecheinsatzlängsachse. Aufgrund der Anordnung und ihrer Dimensionen prägen die nutenförmigen Vertiefungen insbesondere bei kleinsten Spanungsdicken sowie bei duktilen Werkstückstoffen dem Spanquerschnitt Sicken ein, wodurch sich das Widerstandsmoment erhöht und die Entstehung langer Wendel- bzw. Wirrspäne weitgehend verhindert wird. Die sickenförmige Spanquerschnittsformung in genügendem Abstand von den Spanrändern läßt definierte Falzstellen entstehen, um die die Spanränder unter Einwirkung demgegenüber erhabener an die Nebenschneide anschließender Randbereiche hochgebogen werden, so daß sich die Spanbreite gegenüber der Nutbreite reduziert und der Span störungsfrei aus der Nut entweichen kann. Dies führt zu einer guten Oberfläche der Nutflanken. Weiterhin sind die nutenförmigen Vertiefungen weit von den Nebenschneiden entfernt, so daß eine Schwächung der Schneidecken vermieden wird. Diese Wirkung ist auch dann noch gegeben, wenn der Stecheinsatz mit unterschiedlichen Schneidenprofilen, z.B. runden bzw. polygonalen Schneidenprofil, versehen wird. Die nutförmigen Vertiefungen liegen im wesentlichen in Spanablaufrichtung und dienen der Spanbildungsstabilisierung. Der Stecheinsatz kann einschneidig oder auch mehrschneidig, mit an gegenüberliegenden Seiten angeordneten Stirnschneiden ausgebildet sein.

Weiterbildungen der Erfindung sind in den Ansprüchen 2 bis 10 beschrieben.

Vorzugsweise liegt die Länge der nutförmigen Vertiefungen zwischen 1,0 mm und 10 mm und/oder beträgt mindestens das 1,2-fache der Nutenbreite, die im Bereich zwischen 0,05 mm und 1,3 mm, vorzugsweise zwischen 0,1 mm und 1,0 mm, oder zwischen 3 % bis 20 %, vorzugsweise 5 % bis 15 %, der Stechbreite gewählt wird. Die vorgenannte Länge der Vertiefungen ist abgestimmt auf den Bereich, in dem die plastischen Verformungen des ablaufenden Spanes wirksam erzeugt werden können. Die Nutenbreite wird bevorzugt in den angegebenen Grenzen gewählt, um einerseits eine genügend große Wirkung der nutförmigen Vertiefungen gewährleisten zu können und andererseits eine Schwächung sowie eine übermäßige Profilverzerrung der Schneidkante zu vermeiden. Die nutenförmigen Vertiefungen weisen in einem Querschnitt senkrecht zu ihrer Längsachse einen mittleren konkaven Nutgrundbereich mit einem Krümmungsradius zwischen 0,08 mm und 1,0 mm, vorzugsweise 0,15 mm bis 0,4 mm, auf und jeweilige konvexe Randbereiche mit größeren Krümmungsradien. Diese liegen nach einer weiteren Ausgestaltung der Erfindung zwischen 0,1 mm bis 1,5 mm, vorzugsweise zwischen 0,2 mm und 0,7 mm. Eine optimierte sickenförmige Spanquerschnittsformung ergibt sich, wenn die nutenförmigen Vertiefungen in einem Querschnitt senkrecht zu ihrer Längsachse betrachtet einen tangentialen Flankenneigungswinkel zwischen 12° und 50°, vorzugsweise 15° und 30° aufweisen. Eine weitere Optimierung kann durch Wahl des Breite-Tiefe-Verhältnis der nutenförmigen Vertiefungen zwischen 3 und 30, vorzugsweise 8 bis 15, erzielt werden.

Als zusätzliches Mittel zur Spanquerschnittsbeeinflussung dienen vorzugsweise zwischen den und/oder beidseitig der nutenförmigen Vertiefungen sich zum Scheitelpunkt verjüngende erhabene Spanformelemente, die vorzugsweise kantenfrei ausgebildet sind.

Nach einer besonderen Ausgestaltung der Erfindung besitzt das erhabene Spanformelement bzw. besitzen die erhabenen Spanformelemente auf der der Stirnschneide zugewandten Seite eine Anstiegsfläche mit einem Anstiegswinkel zwischen 10° und 45°, bevorzugt zwischen 12° und 30°. Die Anstiegsfläche kann auch keilförmig ausgebildet sein, um einen reibungsarmen Spanablauf zu gewährleisten. Das oder die Spanformelemente weisen eine gegenüber der sie umgebenden Spanbasisfläche gemessene Höhe zwischen 0,05 mm und 1,5 mm, vorzugsweise zwischen 0,1 mm bis 0,8 mm, auf. Alternativ oder zusätzlich beträgt deren Basisbreite 0,3 mm bis 5 mm, vorzugsweise 0,7 mm bis 3 mm, oder sie liegt zwischen 20 % bis 70 %, vorzugsweise 25 % bis 45 %, der durch die Länge einer Stirnschneide definierte Stechbreite. Der jeweilige Scheitelpunkt des erhabenen Spanformelementes liegt bevorzugt in einem Abstand von 0,3 mm bis 5 mm, weiterhin vorzugsweise zwischen 0,5 mm bis 3 mm von der Schneidkante entfernt. Vorzugsweise ist der vordere Fußpunkt an der Basis des Spanformelementes im Abstand zur Schneidkante angeordnet.

Nach einer weiteren Ausgestaltung der Erfindung weist das oder weisen die Spanformelemente im Querschnitt senkrecht zur Stecheinsatzlängsachse im Bereich um den Scheitelpunkt eine kovexe Krümmung auf, deren Radius vorzugsweise etwa gleich der radialen Krümmung bzw. der radialen Krümmungen der nutförmigen Vertiefung ist. Insbesondere für ein mittig zwischen den nutenförmigen Vertiefungen angeordnetes erhabenes Spanformelement beträgt dessen Basisbreite 0,4 mm bis 4 mm, vorzugsweise bei einem Abstand der Vertiefungen zwischen 0,5 mm und 5 mm.

Nach einer weiteren Ausgestaltung der Erfindung besitzt der Stecheinsatz an die Stirnschneide außerhalb der nutförmigen Vertiefungen und/oder an die Nebenschneiden angrenzende Stabilisierungsfasen. Die an die Stirnschneide angrenzende Stabilisierungsfase besitzt bevorzugte Breiten zwischen 0,03 mm und 0,4 mm, während die Breite der an die Nebenschneidkante angrenzenden Stabilisierungsfasen zwischen 0,1 mm und 2 mm gewählt wird. Die an die Nebenschneide angrenzenden seitlichen Stabilisierungsfasen können gegenüber der mittigen Spanablauffläche erhöht ausgebildet sein, wobei deren Kontur im Anschluß an die Stirnschneide und senkrecht hierzu konvex ausgebildet ist.

Vorzugsweise läuft die Spanbasisfläche ausgehend von der Stirnschneide und/oder den Nebenschneiden oder von einer hier angrenzenden Fase unter einem senkrecht zur Schneidkante gemessenen Spanwinkel ≤10°, weiterhin vorzugsweise ≤8°, ein. Wie bereits erwähnt, kann die Spanfläche zwischen den nutförmigen Vertiefungen als abgesenkter Mittelbereich ausgebildet sein. Zusätzlich oder alternativ können die sich zwischen den nutförmigen Vertiefungen und den Nebenschneidkanten erstreckenden Spanflächenrandbereiche erhöht liegen, wobei vorzugsweise die quer zur Stecheinsatzlängsachse liegenden Anstiegsflanken der erhöhten Spanflächenrandbereiche im wesentlichen konvex ausgebildet sein und die nutenförmigen Vertiefungen mit den Grenzen zwischen dem abgesenkten Mittelbereich und den erhöhten Spanflächenrandbereichen im wesentlichen fluchten. Anders ausgedrückt, die nutförmigen Vertiefungen liegen an der Grenzlinie, die sich ohne diese nutenförmigen Vertiefungen zu dem mittleren Spanflächenbereich ergeben würde. Alternativ hierzu können die nutförmigen Vertiefungen zu den vorstehend definierten Grenzlinien zwischen dem Mittelbereich und den Anstiegsflanken etwa einen seitlichen Abstand haben, der kleiner als 15 % der durch die Stirnschneidenlänge vorgegebenen Stechbreite ist.

Die durch den eingestellten Spanwinkel des Stecheinsatzes und den Vorschub im wesentlichen bestimmte Spanungsdicke sollte so gewählt werden, daß die Breite und/oder die Tiefe der nutförmigen Vertiefungen 15 % bis 100 % dieser Spanungsdicke beträgt.

Ausführungsbeispiele der Erfindung sind in den Zeichnungen dargestellt. Es zeigen
- Fig. 1: eine perspektivische Ansicht eines erfindungsgemäßen Stecheinsatzes mit nutenförmigen Vertiefungen und einem dazwischen angeordneten erhabenen Spanformelement,
- Fig. 2: eine Draufsicht auf den Stecheinsatz nach Fig. 1 auf einen Teilbereich der sich an die Stirnschneide anschließenden Schneidkanten,
- Fig. 3a: eine Vorderansicht des Stecheinsatzes nach Fig. 1 oder 2,
- Fig. 3b: eine Ausschnittvergrößerung der Einzelheit X nach Fig. 3a,
- Fig. 4: einen Längsschnitt gemäß Linie IV - IV in Fig. 2,
- Fig. 5: einen Querschnitt gemäß Linie V - V in Fig. 2,
- Fig. 6: eine alternative Ausgestaltung des Stecheinsatzes in perspektivischer Darstellung, in einer Teilansicht,
- Fig. 7: eine Draufsicht auf den Stecheinsatz nach Fig. 6,
- Fig. 8: einen Querschnitt entlang Linie VIII - VIII in Fig. 7,
- Fig. 9a, b: alternativ mögliche Querschnitte zu der Ausführungsform nach Fig. 8.
- Fig. 10: eine perspektivische Ansicht des Schneideinsatzes gemäß Fig. 1, bei dem mögliche konvexe polygonale oder kreisbogenförmige Ausgestaltungen angedeutet sind.

Der Stecheinsatz besitzt eine vordere Freifläche 10, jeweilige Nebenfreiflächen 11, 12, die zusammen mit der Spanfläche 13 eine vordere Schneidkante 14 sowie Nebenschneidkanten 15 und 16 bilden. Im Abstand voneinander und im Abstand von den Nebenschneidkanten 15 und 16 liegen in der Spanfläche 13 nutenförmige Vertiefungen 17 und 18, welche die vordere Schneidkante 14 durchbrechen und im Längsverlauf eine gleichbleibende Breite (mit Ausnahme der hinteren Auslaufzone) aufweisen. Mittig zu den nutenförmigen Vertiefungen 17 und 18 ist eine erhabenes Spanformelement 19 angeordnet, dessen Formgestaltung durch die Profillinien deutlich wird.

Die Spanfläche des Schneideinsatzes kann von der Schneidkante ausgehend einen positiven Spanflächenwinkel aufweisen. Ebenso sind positive Freiwinkel wie auch 0°-Freiwinkel möglich. In schneidkantenferneren Bereichen besitzt der Stecheinsatz eine Anstiegsfläche 20, die zur Spanaufbiegung senkrecht zur Spanablaufebene dient. Diese Anstiegsfläche endet in einer Scheitellinie, die etwa parallel zur Schneidkante 14 verläuft und wohinter die sich anschließende Fläche abfällt und diese abfallende Flanke auch als Anschlag für einen Halter verwendet werden kann, in den der Stecheinsatz eingesetzt wird.

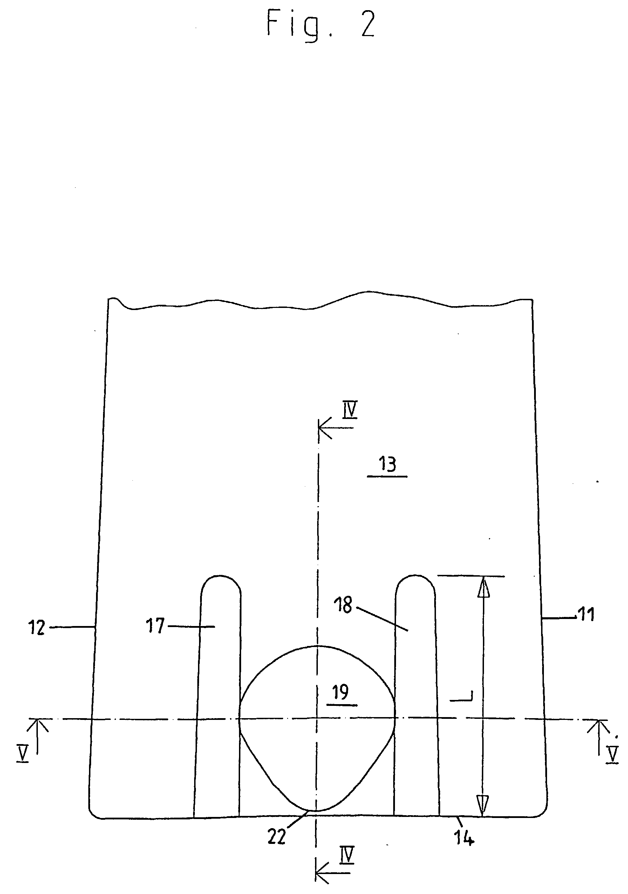

Wie Fig. 2 zeigt, sind in einer konkreten Ausführungsform die Nebenschneidkanten 11 und 12 unter einem Winkel <90° zu der Hauptschneidkante 14 angeordnet. Die Länge L der nutenförmigen Vertiefungen, die mindestens das 1,2-fache der Nutbreite beträgt, liegt vorzugsweise zwischen 1,0 mm und 10 mm. In einer Draufsicht betrachtet läuft das erhabene Spanformelement 19 nach vorne, d.h., zur Schneidkante 14 hin keilförmig aus, wobei der vordere Fußpunkt 22 im Abstand von der Schneidkante 14 angeordnet ist. Zu schneidkantenferneren Bereichen verbreitert sich das Spanformelement bis zu einer maximalen Breite, etwa in Höhe des Schnittes V - V, auf dessen Linie auch der obere Scheitelpunkt des kantenfreien Spanformelementes liegt. Nach hinten hin fällt das erhabene Spanformelement steiler ab, wodurch sich die annähernde und in Fig. 2 dargestellte Tropfenform ergibt. Wie aus Fig. 2 weiterhin ersichtlich, grenzt das erhabene Spanformelement beidseitig an die Übergangskante zu den nutenförmigen Vertiefungen 17 und 18 an. In Spanablaufrichtung betrachtet ist das erhabene Spanformelement länger als breit ausgeführt, wobei die hintere Grenzlinie des Spanformelementes zu der Spanfläche 13 vor den Auslaufbereichen der nutenförmigen Vertiefungen 17 und 18 liegt, die das mittlere Spanformelement 19 nach hinten etwa um die halbe Länge des Spanformelementes überragen. Der vordere durch die zur Schneidkante 14 hin durch die Basisfußlinie des Spanformelementes 19 gebildete Keilwinkel liegt bei 70° bis 90°, vorzugsweise bei 75° bis 85°.

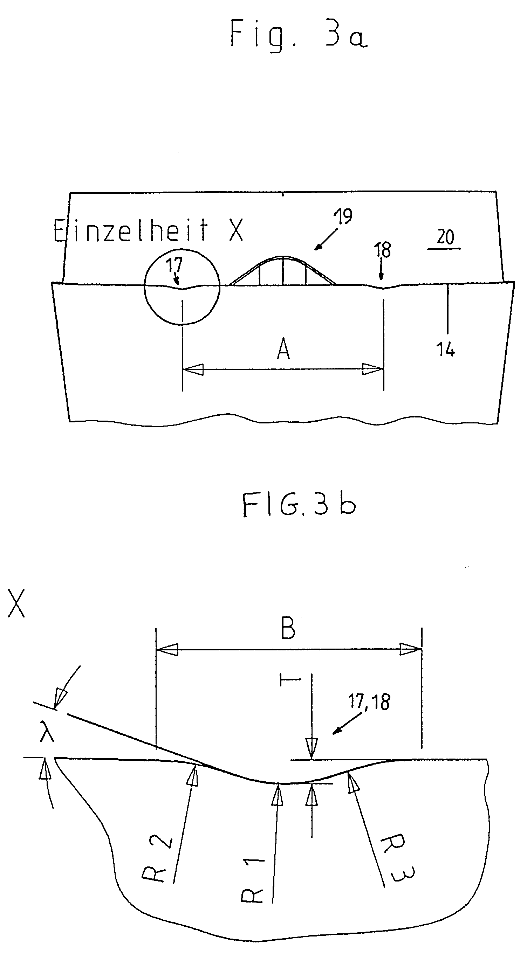

Der Stirnansicht nach Fig. 3a kann entnommen werden, daß das Spanformelement 19 in der gezeigten frontalen Seitenansicht zur Seite hin abfallende Flanken aufweist, die zur Schneidkante in einem Winkel von 35° stehen. Der obere Bereich, der um den Scheitelpunkt liegt, ist konvex mit einem konstanten Radius ausgebildet. Die nutenförmigen Vertiefungen 17 und 18 haben einen Abstand A, der etwa 44 % der durch die Länge der geraden Stirnschneide 14 bestimmten Stechbreite beträgt. Die nutenförmige Vertiefung 17 ist als Einzelheit X in Fig. 3b dargestellt. Die betreffende Vertiefung 17 (wie auch die Vertiefung 18) hat eine Breite B, die im Bereich zwischen 0,05 mm und 1,3 mm, vorzugsweise 0,1 mm bis 1,0 mm, liegt. Die Tiefe T der Nut beträgt 0,01 mm bis 0,4 mm, vorzugsweise 0,025 mm bis 0,2 mm. Die Seitenflanken bilden mit der sie umgebenden Spanfläche 13 bzw. der Stirnschneide 14 einen Winkel λ, der im vorliegenden Fall 20° beträgt. Die nutenförmigen Vertiefungen, die über ihre Länge hin bis auf die Auslaufzone eine konstante Breite und eine konstante Form aufweisen, besitzen im Nutgrund einen Radius R₁ zwischen 0,08 mm und 1,0 mm und jeweilige konvexe Randbereiche mit größeren Krümmungsradien R₂ und R₃, die vorzugsweise zwischen 0,2 mm und 0,7 mm liegen.

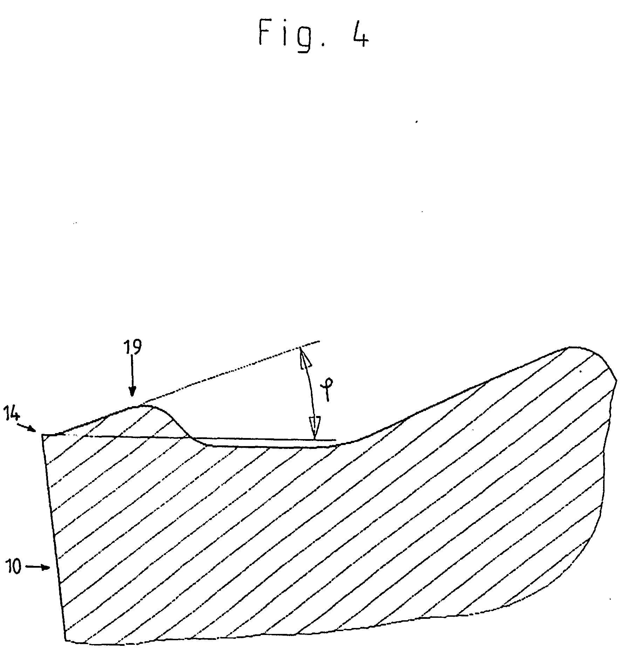

Der in Fig. 4 dargestellte Schnitt entlang der Stecheinsatzlängsachse, der etwa mittig durch das erhabene Spanformelement 19 führt, zeigt, daß der vordere Keilwinkel ϕ des Spanformelementes ca. 20° beträgt. Das erhabene Spanformelement ist im Abstand von der Schneidkante 14 angeordnet und von einem Spanflächenbereich 13 umgeben, der zu stirnschneidenferneren Bereichen hin abfällt, wobei er eine im wesentlichen ebene Fläche oder auch eine konkave Ausgestaltung besitzen kann. Der Neigungswinkel gegenüber einer Horizontalebene liegt bei ca. 4°. Der senkrecht zur Stechlängsachse liegende Schnitt, der etwa im Bereich des Scheitelpunktes des erhabenen Spanformelementes 19 liegt, verdeutlicht die Höhe H des genannten Scheitelpunktes zur sie umgebenden Spanbasisfläche, die zwischen 0,05 mm und 1,5 mm liegt. Der Krümmungsradius R₄ liegt in der Größenordnung von R₁, R₂ oder R₃. Die Basisbreite C des Spanformelementes 19 liegt zwischen 0,3 mm bis 5 mm. Jeweils beidseitig und spiegelsymmetrisch zu dem erhabenen Spanformelement 19 liegen die nutenförmigen Vertiefungen 17 und 18. Die Spanflächenrandbereiche 131 und 132 steigen zu den Nebenschneidkanten 15 und 16 hin an, wobei der Neigungswinkel zu der Stirnschneide 14 zwischen -4° und +8° liegt.

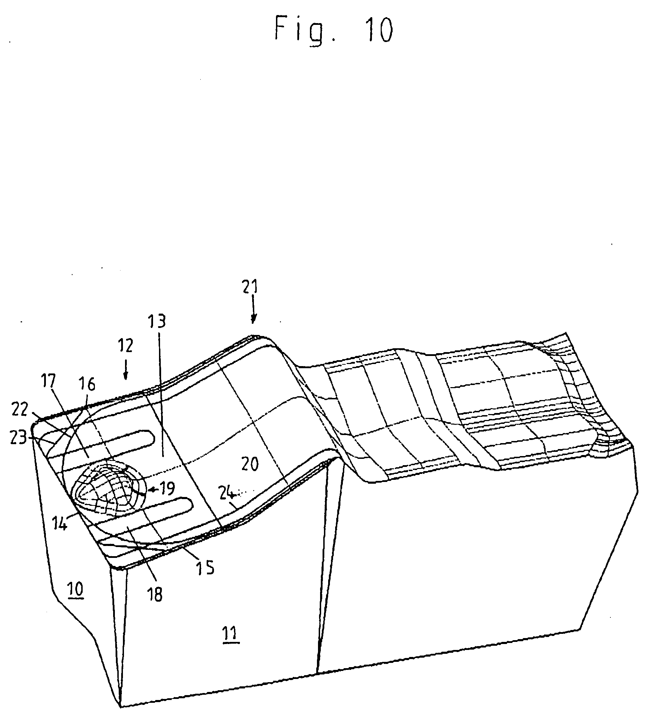

Fig. 10 zeigt weitere Schneidprofile des vorbeschriebenen Stecheinsatzes, die kreisbogenförmig (vgl. Bezugslinie 22), konvex polygonal (vgl. Bezugslinie 23) oder gerade (vgl. Bezugslinie 24) mit geringerer Stechbreite ausgebildet sind.

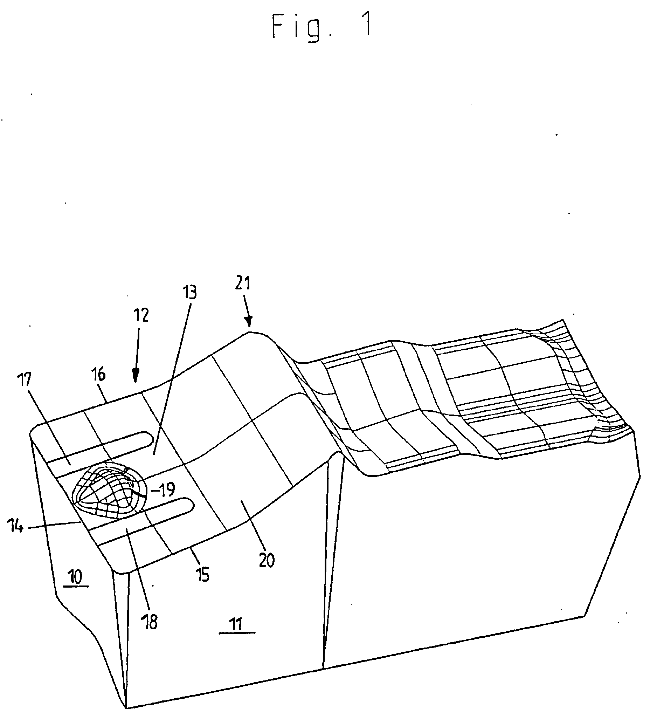

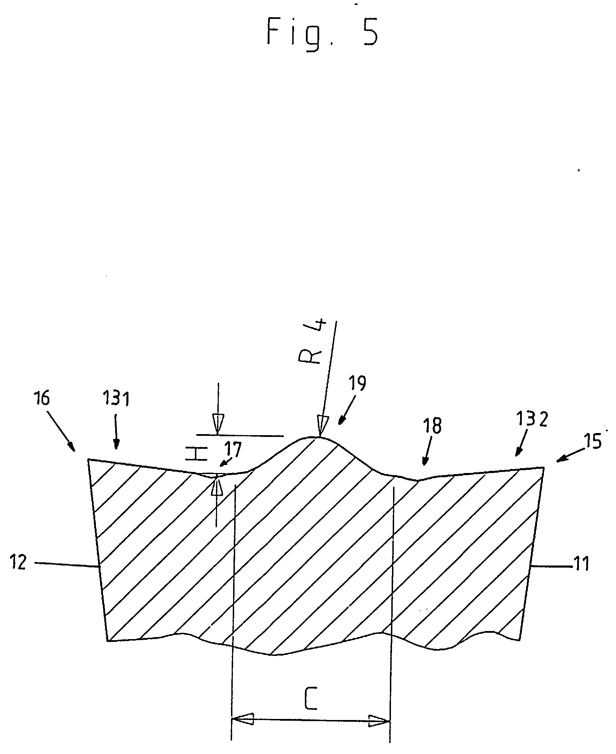

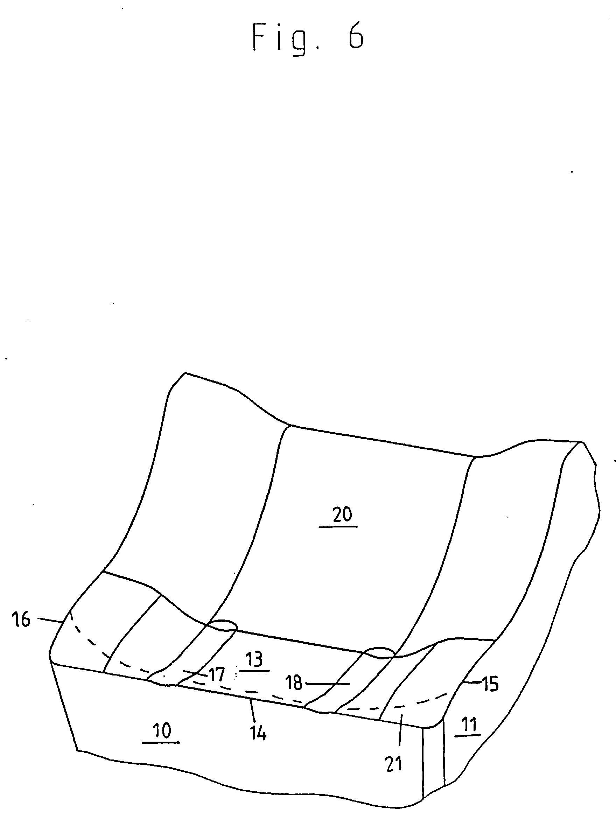

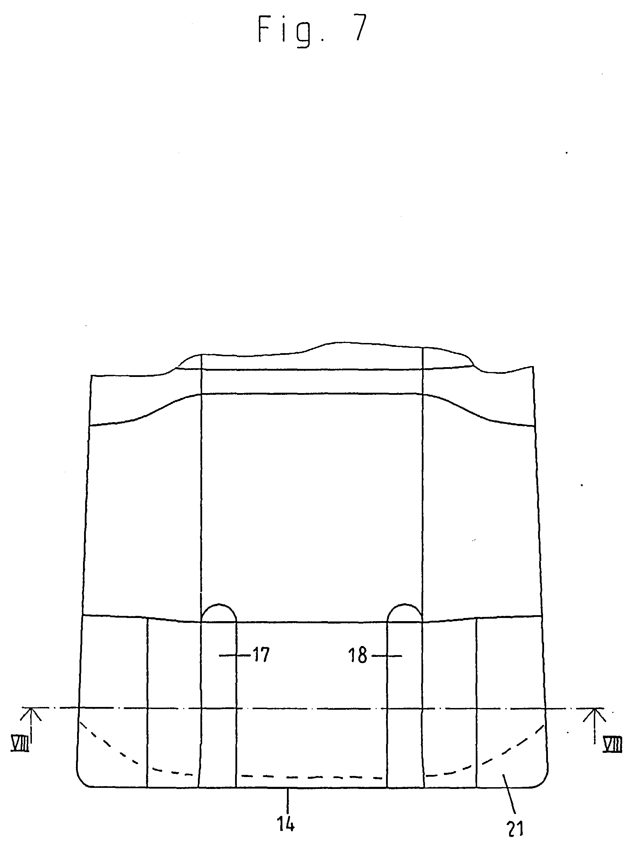

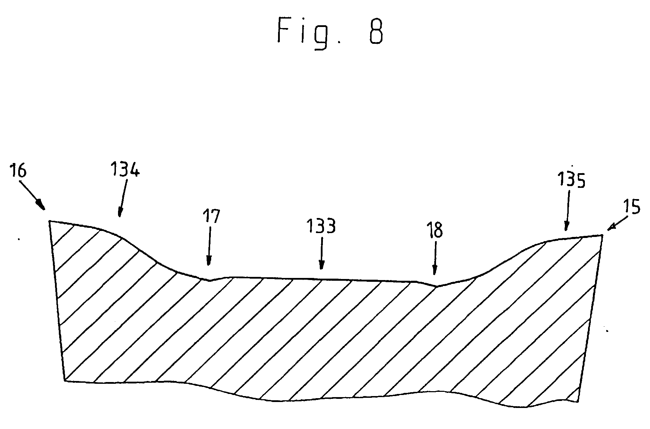

Eine alternative Ausführungsform des Schneideinsatzes ist Fig. 6 zu entnehmen. Bei dem dort dargestellten Schneideinsatz sind gleiche Teile wie beim vorhergehend beschriebenen Schneideinsatz mit gleichen Bezugszeichen versehen, so auch die nutenförmigen Vertiefungen 17 und 18, die in entsprechender Weise die Schneidkante 14 durchbrechen. Hinsichtlich deren Dimensionen gilt das zu dem Schneideinsatz nach Fig. 1 bis 5 Gesagte. Dieser Schneideinsatz besitzt zwischen den nutenförmigen Vertiefungen 17 und 18 kein Spanformelement. Die Spanfläche 13 fällt im Anschluß an die Stirnschneide 14 zwischen nutenförmigen Vertiefungen 17 und 18 als Mulde mit konkaver Ausbildung ab, während die seitlichen Spanflächenrandbereiche zwischen den nutenförmigen Vertiefungen 17 und 18 und den Nebenschneidkanten 15 und 16 überhöht ausgebildet sind und hierdurch stabilisierend wirken. Diese Spanflächenrandbereiche sind in vertikaler Richtung zur Stirnschneide 14 im Gegensatz zur beschriebenen Spanflächenmulde ansteigend ausgeführt, so daß sie dort eine Fase 21 bilden, bevor sie zu stirnschneidenferneren Bereichen zu 0°-Winkeln bzw. abfallenden Winkeln vor der Anstiegsfläche 20 verlaufen. Die Fase 21 liegt im Schneideckenbereich vorzugsweise unter einem negativen Spanwinkel und hat in Richtung der Stecheinsatzlängsachse dort eine größere Länge als im Mittenbereich der Stirnschneide. Die Schnittansicht gemäß Schnittlinie VIII - VIII nach Fig. 7 zeigt in Fig. 8 den abgesenkten Bereich 133, der in der Schnittansicht geradlinig verläuft. Seitlich der muldenförmigen Vertiefungen 17 und 18 bilden die Flanken der Spanflächenrandbereiche einen Winkel von ca. 30° mit der Horizontalebene der mittleren Spanfläche 133. Im Anschluß an die seitlichen Anstiegsflanken folgt in den Bereichen 134 und 135 ein konvexer Bereich bis hin zu einem im Schnitt geradlinigen Auslauf zur Nebenschneide 15 bzw. 16.

Durch diese Ausgestaltung werden die Schneidecken und Nebenschneiden stabilisiert sowie die Spanverschmälerung und die Spanführung begünstigt.

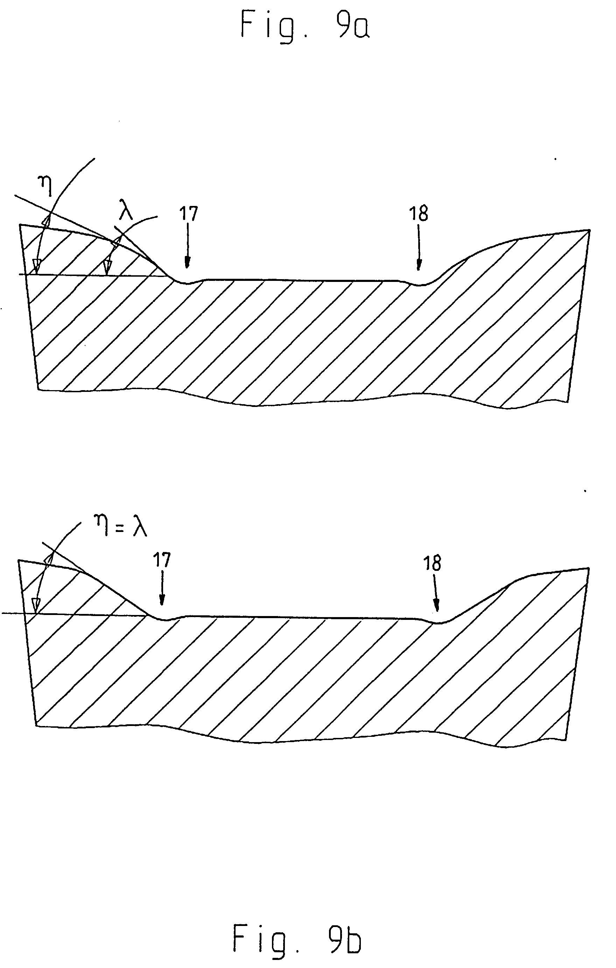

Mögliche Alternativausführungen der betreffenden Spanflächenrandbereiche 134 und 135 sind Fig. 9a und Fig. 9b zu entnehmen, insbesondere können die jeweiligen Flankenwinkel λ und η, die nach Fig. 9a 45° bzw. 30° betragen, gleich, etwa unter 35° wie in Fig. 9b dargestellt ausgeführt sein. Die den nutenförmigen Vertiefungen 17 und 18 zugewandten seitlichen Spanflächenflanken sind in den dargestellten Figuren so angeordnet, daß deren unterer, an den Mittelbereich angrenzender Fußbereich etwa mit den nutenförmigen Vertiefungen 17 un d18 fluchtet. Es ist jedoch ebenso möglich, die nutenförmigen Vertiefungen 17 und 18 so anzuordnen, daß sie näher beieinanderliegen (aber unter Einhaltung des definierten Mindestabstandes), so daß sie inmitten eines im Querschnitt linearen Mittenbereiches liegen, an den beidseitig die jeweiligen abfallenden Flanken der Spanflächenseitenrandbereiche angrenzen.

## Patentansprüche

1. Stecheinsatz zur spanabhebenden Bearbeitung von Werkstücken, mit mindestens einer vorderen Schneidkante (Stirnschneide) (14), die von zwei achsensymmetrisch und parallel zur Stecheinsatzlängsachse in der Spanfläche (13) liegenden nutenförmigen Vertiefungen (17, 18) mit über ihre Länge (L) gleichbleibender Breite (B) durchbrochen wird, die einen lateralen Abstand (A) zwischen 30 % und 80 %, vorzugsweise 40 % bis 65 %, der Stechbreite und - bezogen auf die die nutenförmigen Vertiefungen (17, 18) umgebende Spanfläche (13) - eine Nuttiefe (T) zwischen 0,01 mm und 0,4 mm aufweisen.

2. Stecheinsatz nach Anspruch 1, dadurch gekennzeichnet, daß die Länge (L) der nutförmigen Vertiefungen (17, 18) zwischen 1,0 mm und 10 mm liegt und/oder mindestens das 1,2-fache der Nutenbreite (B) beträgt, die im Bereich zwischen 0,05 mm und 1,3 mm, vorzugsweise zwischen 0,1 mm und 1,0 mm, oder zwischen 3 % bis 20 %, vorzugsweise 5 % bis 15 % der Stechbreite beträgt.

3. Stecheinsatz nach Anspruch 1 oder 2, dadurch gekennzeichnet, daß die nutenförmigen Vertiefungen (17, 18) in einem Querschnitt senkrecht zu ihrer Längsachse einen mittleren konkaven Nutgrundbereich mit einem Krümmungsradius (R₁) zwischen 0,08 mm und 1,0 mm, vorzugsweise 0,15 mm bis 00,4 mm, und jeweilige konvexe Randbereiche mit größeren Krümmungsradien (R₂, R₃) vorzugsweise zwischen 0,1 mm bis 1,5 mm, weiterhin vorzugsweise zwischen 0,2 mm und 0,7 mm aufweisen.

4. Stecheinsatz nach einem der Ansprüche 1 bis 3, dadurch gekennzeichnet, daß das Breite-Tiefe-Verhältnis (B/T) der nutenförmigen Vertiefungen (17, 18) zwischen 3 und 30, vorzugsweise 8 und 15 liegt.

5. Stecheinsatz nach einem der Ansprüche 1 bis 4, dadurch gekennzeichnet, daß zwischen den und/oder beidseitig der nutförmigen Vertiefungen (17, 18) ein sich zum Scheitelpunkt verjüngendes erhabenes Spanformelement (19) bzw. jeweils Spanformelemente angeordnet ist/sind, wobei weiterhin vorzugsweise das/die erhabene(n) Spanformelement(e) (19) kantenfrei ausgebildet ist/sind und/oder auf der der Stirnschneide (14) zugewandten Seite eine Anstiegsfläche mit einem Anstiegswinkel (ϕ) zwischen 10° und 45°, vorzugsweise zwischen 12° und 30°, aufweist/aufweisen und/oder die Anstiegsfläche keilförmig ausgebildet ist.

6. Stecheinsatz nach Anspruch 5, dadurch gekennzeichnet, daß das oder die Spanformelement(e) (19) eine gegenüber der sie umgebenden Spanbasisfläche (13) gemessene Höhe (H) zwischen 0,05 mm und 1,5 mm, vorzugsweise 0,1 mm bis 0,8 mm, und/oder eine Basisbreite (C) zwischen 0,3 mm bis 5 mm, vorzugsweise zwischen 0,7 mm und 3 mm, oder zwischen 20 % bis 70 %, vorzugsweise 25 % bis 45 %, der Stechbreite aufweist/aufweisen.

7. Stecheinsatz nach einem der Ansprüche 5 oder 6, dadurch gekennzeichnet, daß das Spanformelement (19) im Querschnitt senkrecht zur Stecheinsatzlängsachse im Bereich um den Scheitelpunkt eine konvexe Krümmung aufweist, deren Radius (R₄) vorzugsweise etwa gleich der radialen Krümmung der nutenförmigen Vertiefungen (17, 18) ist.

8. Stecheinsatz nach einem der Ansprüche 1 bis 7, dadurch gekennzeichnet, daß die Spanbasisfläche (13) ausgehend von der Stirnschneide (14) und/oder den Nebenschneiden (15, 16) oder von einer hier angrenzenden Fase unter einem senkrecht zur Schneidkante gemessenen Spanwinkel ≤10°, vorzugsweise ≤8°, einlauft.

9. Stecheinsatz nach einem der Ansprüche 1 bis 8, dadurch gekennzeichnet, daß die Spanfläche (13) zwischen den nutförmigen Vertiefungen (17, 18) als abgesenkter Mittelbereich (133) ausgebildet ist und/oder sich zwischen den nutförmigen Vertiefungen (17, 18) und den Nebenschneiden (15, 16) erhöhte Spanflächenrandbereiche (131, 132, 134, 135) erstrecken, wobei vorzugsweise die quer zur Stecheinsatzlängsachse liegenden Anstiegsflanken der erhöhten Spanflächenrandbereiche im wesentlichen konvex ausgebildet sind und die nutenförmigen Vertiefungen (17, 18) mit den Grenzen zwischen dem abgesenkten Mittelbereich (133) und den erhöhten Spanflächenrandbereichen im wesentlichen fluchten.

10. Stecheinsatz nach einem der Ansprüche 1 bis 9, dadurch gekennzeichnet, daß die Schneide quer zur Stecheinsatzlängsachse angeordnet und gerade ist oder kreisbogenförmig oder konvex polygonal ausgebildet ist.

## Claims

1. Recessing tool insert for the material-removing machining of workpieces and having at least a front cutting edge (end cutting edge) (14) that is interrupted by two axial-symmetrical groove-shaped recesses (17, 18) extending on a rake face (13) parallel to a recessing-tool insert axis, having over their entire lengths (L) a uniform width (B), having a lateral spacing (A) equal to between 30 % and 80 %, preferably 40 % to 65 %, of an overall cutting width, and have relative to a rake face (13) surrounding the groove-shaped recesses (17, 18) a groove depth (T) between 0,1 mm and 0,4 mm.

2. Recessing tool insert according to claim 1, characterised in that the length (L) of the groove-shaped recesses (17, 18) lies between 1,0 mm and 10 mm and/or is at least 1,2 times the groove width (B) which is between 0,05 mm and 1,3 mm, preferably between 0,1 mm and 1,0 mm, or between 3 % and 20 %, preferably 5 % to 15 %, of the cutting width.

3. Recessing tool insert according to claim 1 or 2, characterised in that seen in cross section perpendicular to its longitudinal axes the groove-shaped recesses (17, 18) have a central concave groove floor region with a radius of curvature (R₁) between 0,08 mm and 1,0 mm, preferably 0,15 mm and 0,4 mm and respective convex edge regions with larger radii of curvature (R₂, R₃) preferably between 0,1 mm and 1,5 mm and further preferably between 0,2 mm and 0,7 mm.

4. Recessing tool insert according to one of claims 1 to 3, characterised in that the width/depth ratio (B/T) of the groove-shaped recesses (17, 18) is between 3 and 30, preferably 8 and 15.

5. Recessing tool insert according to one of claims 1 to 4, characterised in that between and/or to both sides of the groove-shaped recesses (17, 18) there is /are raised (a) chip-shaping element(s) (19) tapering upward to an apex and preferably formed without sharp edges and/or the flank turned toward the end-cutting edge (14) has a climbing surface with an angle (ϕ) between 10° and 45°, preferably 12° and 30° and/or the climbing flank is wedge-shaped.

6. Recessing tool insert according to claim 5, characterised in that the chip-shaping element(s) (19) has/have relative to the surrounding rake basis face (13) a height (H) between 0,05 mm and 1,5 mm, preferably 0,1 mm to 0,8 mm and/or a base width (C) between 0,3 mm and 5 mm, preferably between 0,7 mm and 3 mm, or between 20 % and 70 %, preferably 25 % and 45 % of the cutting width.

7. Recessing tool insert according to one of claims 5 or 6, characterised in that the chip-shaping element (19) seen in cross section transverse to the recessing-tool longitudinal axis has in the region of its apex a convex shape whose radius (R₄) preferably is about equal to the radial curvature of the groove-shaped recesses (17, 18).

8. Recessing tool insert according to one of claims 1 to 7, characterised in that the rake basis face (13) runs from the end cutting edge (14) and/or from the secondary cutting edges (15, 16) or from a land adjacent thereto at an rake angle ≤ 10°, preferably ≤ 8°, with a perpendicular from the end cutting edge.

9. Recessing tool insert according to one of claims 1 to 8, characterised in that the rake face (13) is formed between the groove-shaped recesses (17, 18) as a recessed central region (133) and/or raised rake face edge regions (131, 132, 134, 135) extend between the groove-shaped recesses (17, 18) and the side edges (15, 16), whereby preferably the climbing flanks of the raised rake face edge regions lying transverse to the recessing-tool longitudinal axis being shaped generally convex and the groove-shaped recesses (17, 18) generally merging with the edges between the recessed central region (133) and the raised rake face edge regions.

10. Recessing tool insert according to one of claims 1 to 9, characterised in that the cutting edge extends perpendicular to the recessing-tool longitudinal axis and is straight or curved or convexly polygonal.

## Revendications

1. Insert à saigner pour l'usinage de pièces par enlèvement de copeaux, avec du moins un tranchant avant (tranchant frontal) (14) qui est interrompu par deux creux (17, 18) en forme de rainure, qui sont situés dans la face de coupe (13) de manière symétrique par rapport à l'axe et parallèlement à l'axe longitudinal de l'insert à saigner et présentent une largeur (B) constante sur leur longueur (L) et une distance latérale (A) comprise entre 30 % et 80 %, de préférence entre 40 % et 65 %, de la largeur à saigner et - par rapport à la face de coupe (13) entourant les creux (17, 18) en forme de rainure - une profondeur (T) de rainure qui est comprise entre 0,01 mm et 0,4 mm.

2. Insert à saigner selon la revendication 1, caractérisé par le fait que la longueur (L) des creux (17, 18) en forme de rainure est comprise entre 1,0 mm et 10 mm et/ou est au moins 1,2 fois plus grande que la largeur (B) de la rainure, qui est comprise entre 0,05 mm et 1,3 mm, de préférence entre 0,1 mm et 1,0 mm, ou entre 3 % et 20 %, de préférence entre 5 % et 15 % de la largeur à saigner.

3. Insert à saigner selon la revendication 1 ou 2, caractérisé par le fait que, vus en coupe transversale perpendiculaire à leur axe longitudinal, les creux (17, 18) en forme de rainure présente une zone de fond concave centrale de la rainure, avec un rayon de courbure (R₁) qui est compris entre 0,08 mm et 1,0 mm, de préférence entre 0,15 mm et 00,4 mm, ainsi que des zones marginales convexes respectives avec des rayons de courbure (R₂, R₃) plus grands, de préférence entre 0,1 mm et 1,5 mm, en outre de préférence entre 0,2 mm et 0,7 mm.

4. Insert à saigner selon l'une des revendications 1 à 3, caractérisé par le fait que le rapport largeur-profondeur (B/T) des creux (17, 18) en forme de rainure est compris entre 3 et 30, de préférence entre 8 et 15.

5. Insert à saigner selon l'une des revendications 1 à 4, caractérisé par le fait qu'un élément élevé (19) à former le copeau, s'effilant vers le sommet ou bien des éléments élevés à former le copeau, s'effilant vers le sommet est ou bien sont disposé(s) entre les et/ou des deux côtés des creux (17, 18) en forme de rainure, en outre de préférence l'élément élevé à former le copeau ou bien les éléments élevés (19) à former le copeau étant réalisé(s) sans arêtes et/ou présentant du côté montrant vers le tranchant frontal (14) une surface montante avec un angle de montée (ϕ) compris entre 10° et 45°, de préférence entre 12° et 30°, et/ou la surface montante étant réalisée de manière cunéiforme.

6. Insert à saigner selon la revendication 5, caractérisé par le fait que l'élément ou les éléments (19) à former le copeau présente(nt) une hauteur (H) mesurée par rapport à la face de base de coupe (13) les entourant, qui est comprise entre 0,05 mm et 1,5 mm, de préférence entre 0,1 mm et 0,8 mm, et/ou une largeur de base (C) qui est comprise entre 0,3 mm et 5 mm, de préférence entre 0,7 mm et 3 mm, ou entre 20 % et 70 %, de préférence entre 25 % et 45 % de la largeur à saigner.

7. Insert à saigner selon l'une des revendications 5 ou 6, caractérisé par le fait que, vu en coupe transversale perpendiculaire à l'axe longitudinal de l'insert à saigner, l'élément (19) a former le copeau présente dans la zone située autour du sommet une courbure convexe dont le rayon (R₄) est, de préférence, à peu près égal à la courbure radiale des creux (17, 18) en forme de rainure.

8. Insert à saigner selon lune des revendications 1 à 7, caractérisé par le fait que. partant du tranchant frontal (14) et/ou des tranchants secondaires (15, 16) ou d'un chanfrein y adjacent, la face de base de coupe (13) s'étend sous un angle de coupe ≤10°, de préférence ≤8°, mesuré verticalement au tranchant.

9. Insert a saigner selon l'une des revendications 1 a 8, caractérisé par le fait que la face de coupe (13) entre les creux (17, 18) en forme de rainure est formée en tant que zone centrale abaissée (133) et/ou que des zones marginales élevées (131, 132, 134, 135) de la face de coupe s'étendent entre les creux (17, 18) en forme de rainure et les tranchants secondaires (15, 16), de préférence les flancs montants des zones marginales élevées de la face de coupe, qui sont situés transversalement à l'axe longitudinal de l'insert à saigner étant pour l'essentiel convexes, et les creux en forme de rainure (17, 18) étant pour l'essentiel alignés avec les limites entre la zone centrale abaissée (133) et les zones marginales élevées de la face de coupe.

10. Insert à saigner selon l'une des revendications 1 à 9, caractérisé par le fait que le tranchant est disposé transversalement a l'axe longitudinal de l'insert à saigner et est droit ou présente la forme d'un arc de cercle ou est convexe-polygonal.
